# EUROPÄISCHE PATENTSCHRIFT

(11) **EP 2 930 064 B1**
(45) Veröffentlichungstag und Bekanntmachung des Hinweises auf die Patenterteilung: **09.11.2016**
(21) Anmeldenummer: 15165455.5
(22) Anmeldetag: 12.03.2012
(51) Int. Cl.: B60R 5/04, E06B 9/42, B60J 1/20, E06B 7/00

(54) **ROLLOKASSETTE UND ROLLOSYSTEM**
ROLLER CASSETTE AND ROLLER SYSTEM
CAISSON DE STORE ET SYSTÈME DE STORE

(30) Priorität: 18.03.2011 DE 102011005819
(43) Veröffentlichungstag der Anmeldung: 14.10.2015
(62) Teilanmeldung aus: 12159111.9
(73) Patentinhaber: BOS GmbH & Co. KG, 73760 Ostfildern (DE)
(72) Erfinder: Schleef, Thomas, 32457 Porta Westfalica (DE); Walter, Herbert, 73061 Ebersbach (DE)
(74) Vertreter: Patentanwälte Ruff, Wilhelm, Beier, Dauster & Partner mbB

(56) Entgegenhaltungen:
- DE-A1- 10 108 216
- DE-A1- 19 707 674

## Beschreibung

### Anwendungsgebiet und Stand der Technik

Die Erfindung betrifft eine Rollokassette zur Aufnahme einer Rollowelle und einer in einem Stauzustand auf der Rollowelle aufgewickelten und in einen Funktionszustand durch einen Austrittsspalt der Rollokassette von der Rollowelle in einer Längsrichtung abziehbaren Rollobahn mit einem Gehäuse, welches ein durchgehend geschlitztes und sich in eine Haupterstreckungsrichtung quer zur Längsrichtung erstreckendes Hohlprofil aufweist, dessen Schlitz den Austrittsspalt der Rollokassette bildet.

Gattungsgemäße Rollokassetten sind aus dem Stand der Technik allgemein bekannt und werden bei Rollos in Kraftfahrzeugen, beispielsweise bei Beschattungsrollos oder Laderaumabdeckungen, verwendet, um die Rollobahn im aufgewickelten Zustand aufzunehmen, wenn diese nicht im Funktionszustand benötigt wird. Der Grundkörper solcher Rollokassetten, der als geschlitztes Hohlprofil ausgebildet ist, stellt fertigungstechnisch gegenüber einem geschlossenen und nachbearbeiteten Hohlprofil einen Vorteil dar, da hierdurch der Bearbeitungsaufwand verringert und die Kosten damit gesenkt werden können. Allerdings haben derartige geschlitzte Hohlprofile eine gegenüber geschlossenen Hohlprofilen deutlich verringerte Verwindungssteifigkeit, da ihre Kanten im Bereich des Schlitzes eine Relativverlagerung in Haupterstreckungsrichtung wenig Widerstand entgegensetzen. Bei bekannten Rollokassetten mit geschlitztem Hohlprofil ist zur Erzielung einer außenreichenden Verwindungssteifigkeit vorgesehen, dass vergleichsweise dicke Mittelbleche Verwendung finden, insbesondere solche mit Wandstärken größer 1,5 mm. Kleinere Wandstärken sind bislang als nachteilig angesehen worden, da sie eine ausreichende Verwindungssteifigkeit der Rollokassette nicht gewährleisten können.

Nachteilig an diesen aus dem Stand der Technik bekannten Rollokassetten mit hoher Wandungsstärke ist allerdings, dass deren Masse vergleichsweise groß ist. Zunehmend besteht jedoch das Bedürfnis, alle in einem Fahrzeug verwendeten Komponenten hinsichtlich ihrer Masse zu reduzieren, um die Effizienz der Fahrzeuge zu erhöhen. Eine solche Massenverringerung ist auch in Hinblick auf Rollokassetten gewünscht.

### Aufgabe und Lösung

Aufgabe der Erfindung ist es daher, eine Rollokassette gattungsgemäßen Typs dahingehend weiterzubilden, dass diese bei ausreichender Verwindungssteifigkeit eine geringe Masse aufweist.

Dies kann dadurch erreicht werden, dass zwei sich gegenüberliegende und in Haupterstreckungsrichtung erstreckte Randbereiche beidseitig des Schlitzes des Hohlprofils miteinander jeweils im Bereich zweier gegenüberliegenden Stirnenden des Hohlprofils durch einen Verbindungsteg verbunden sind, wobei dieser Verbindungssteg mit mindestens einem der Randbereiche mittels Verbindungsmitteln verbunden ist, die eine Drehbeweglichkeit des Verbindungsstegs am Randbereich quer zur Hauptersteckungsrichtung der Rollokassette formschlüssig entgegenwirken.

Es kann demnach vorgesehen werden, die Randbereiche der Kassette unmittelbar miteinander zu verbinden, wobei diese Verbindung über einen Verbindungssteg derart realisiert ist, dass der Verbindungssteg an mindestens einem Rand derart festgelegt ist, dass er sich nicht um eine gedachte, quer zur Haupterstreckungsrichtung ausgerichtete Achse verdrehen kann, da dies der gewünschten Verwindungssteifigkeit entgegenwirken würde. Eine Verhinderung der Drehbeweglichkeit an beiden durch den Verbindungssteg miteinander verbundenen Randbereichen ist von Vorteil, jedoch nicht zwingend erforderlich, da durch die genannte Drehfixierung des Verbindungsmittels an einem Randbereich eine Fixierung erreicht ist, die es gestattet, die Fixierung auf der gegenüberliegenden Seite einfacher auszugestalten. Als Randbereich im Sinne dieser Erfindung wird ein Bereich verstanden, der von dem Schlitz des Hohlprofils nicht weiter als 15 mm, vorzugsweise nicht weiter als 10 mm entfernt ist. Innerhalb dieses Randbereichs erfolgt zumindest zum Teil die Krafteinleitung vom Hohlprofil in den Verbindungssteg.

Durch die beschriebene Verbindung der gegenüberliegenden Randbereiche mittels eines Verbindungssteges kann eine deutliche Erhöhung der Verwindungssteifigkeit erzielt werden, so dass die Notwendigkeit der Verwendung sehr dicken Blechmaterials entfällt. Eine Massenreduktion ist daher erzielbar.

Besonders einfache Ausgestaltungen der Verbindung zwischen der Rollokassette und dem Verbindungssteg sind zu erreichen, wenn hierfür Schraubverbindungen oder Nietverbindungen Verwendung finden, wobei in einem solchen Falle zumindest an einer der beiden Seiten zur Erzielung der formschlüssigen Verhinderung einer Drehbeweglichkeit zwei derartige Schrauben bzw. Nieten vorgesehen sein sollten.

Eine alternative Ausgestaltung, die insbesondere in Hinblick auf eine einfache Montage von Vorteil ist, sieht vor, dass die Verbindungsmittel zur Verbindung des Verbindungssteges mit dem Hohlprofil einen im Randbereich des Gehäuses vorgesehenen und durch das Gehäuse gebildeten Aufnahmeschacht aufweisen, in den ein am Verbindungssteg vorzugsweise einstückig vorgesehener Steckabschnitt in Haupterstreckungsrichtung eingesteckt ist. Bei einer solchen Gestaltung wird somit durch eine passende Formgebung des Hohlprofils ein in Haupterstreckungsrichtung erstreckter Aufnahmeschacht gebildet, in den ein ebenfalls in Haupterstreckungsrichtung erstreckter Steckabschnitt des Verbindungssteges eingeschoben wird. Dabei können der Aufnahmeschacht und der Steckabschnitt einen über ihre Länge gleichbleibenden Querschnitt aufweisen. Vorteilhaft ist jedoch eine leichte Verjüngung des Steckabschnittes hin zu seinem distalen Ende, so dass bei vollständig eingestecktem Steckabschnitt auch eine kraftschlüssige Kopplung zwischen dem Gehäuse und dem Steckabschnitt in Hinblick auf eine Relativbewegung in Richtung der Haupterstreckungsrichtung erreicht wird. Bei dieser Gestaltung ist weiterhin von Vorteil, wenn beidseitig des Schlitzes derartige Aufnahmeschächte vorgesehen sind und am Verbindungssteg zwei zueinander im Wesentlichen parallele Steckabschnitte vorgesehen sind, die an den beiden gegenüberliegenden Randbereichen in diese Aufnahmeschächte eingeschoben werden.

Durch die oben genannte Verjüngung lässt sich eine Pressverbindung herstellen, die kraftschlüssig einem Herausziehen des Verbindungssteges auf den Aufnahmeschächten oder dem mindestens einem Aufnahmeschacht entgegenwirkt. Vorteilhaft ist eine formschlüssig wirkende Verhinderung des Herausziehens. Diese kann beispielsweise durch eine das Hohlprofil im Bereich des Aufnahmeschachtes und den Steckabschnitt durchdringende Verbindungsschraube, einen Verbindungsstift oder einen Verbindungsniet gebildet werden. Eine besonders vorteilhafte Ausgestaltung sieht jedoch vor, dass formschlüssig wirkende Sicherungsmittel am Hohlprofil und dem Steckabschnitt vorgesehen sind, insbesondere zur Bildung einer Schnappverbindung, mittels derer der Steckabschnitt im Aufnahmeschacht gegen Herausziehen gesichert ist. Diese Sicherungsmittel sind vorzugsweise derart ausgebildet, dass sie bereits durch Einstecken des Steckabschnitts in den Aufnahmeschacht in einen Sicherungszustand gelangen. Die Funktionsweise kann dabei die eines Widerhakens sein. Dies führt zu einer sehr einfachen Montage, da lediglich der Verbindungssteg und der an ihm angeformte Steckabschnitt seitlich an das Hohlprofil herangeführt werden muss und in dieses eingeschoben werden muss, um die gewünschte Verbindung zu schaffen. Eine konkrete Ausgestaltung des Sicherungsmittels könnte beispielsweise vorsehen, dass im Hohlprofil Aussparungen oder Vertiefungen an der Innenseite des Aufnahmeschachtes vorgesehen sind, in die eine Schnappzunge, die am Steckabschnitt vorgesehen ist, einschnappt, sobald der Steckabschnitt ausreichend weit in den Aufnahmeschacht eingeführt ist. Eine umgekehrte Gestaltung, bei der die Ausnehmung oder die Vertiefung im Steckabschnitt vorgesehen ist und bei der die Schnappzunge am Hohlprofil vorgesehen ist, ist gleichermaßen zweckmäßig.

Zur Ausbildung des Aufnahmeschachtes ist vorzugsweise vorgesehen, dass im an den Schlitz angrenzenden Randbereich des Hohlprofils beidseitig des Schlitzes das Hohlprofil umgefalzt ist und dadurch beidseitig schlitzartige Aufnahmeschächte bildet.

Der Verbindungssteg kann derart ausgebildet sein, dass er lediglich die Verbindung zwischen den beiden gegenüberliegenden Randbereichen schafft, die Stirnenden des Hohlprofils jedoch unverschlossen lässt. Es kann jedoch auch zweckmäßig sein, wenn der Verbindungssteg insbesondere einstückig mit einer das Hohlprofil stirnseitig abschließenden Stirnkappe ausgebildet ist, welche das offene Stirnende des Gehäuses zumindest zum überwiegenden Teil verschließt. Bei einer solchen Gestaltung übernimmt der Verbindungssteg somit eine Doppelfunktion. Er ist Träger der an ihr befestigten oder angeformten stirnseitigen Wandung des Gehäuses und gleichzeitig Stabilisator des Gehäuses gegen Verwindungen. Die Stirnwandung kann gleichzeitig auch dem Zweck dienen, Lagerstelle für die innerhalb des Gehäuses drehbar gelagerte Rollowelle zu sein.

Die Erfindung betrifft eine zu dieser beschriebenen Gestaltung verwandte Gestaltung, bei der eine gattungsgemäße Rollokassette dahingehend weitergebildet ist, dass sich von mindestens einem Randbereich an mindestens einem der Stirnenden ein Verbindungssteg über den Schlitz erstreckt, der einstückiger Teil des Hohlprofils ist und dessen distales Ende am gegenüberliegenden Bereich befestigt ist. Alternativ dazu können sich von beiden gegenüberliegenden Randbereichen an mindestens einem Stirnende des Hohlprofils jeweils Verbindungsstege über den Schlitz erstrecken, die jeweils einstückiger Teil des Hohlprofils sind und deren distale Enden miteinander verbunden sind.

Bei einer solchen Gestaltung wird somit auf einen separaten Verbindungssteg verzichtet. Stattdessen finden je Stirnende ein oder zwei Verbindungsstege Anwendung, die einstückiger Teil des Hohlprofils sind. Im Falle der Verwendung nur eines solchen Verbindungssteges je Stirnseite erstreckt sich dieser über den Schlitz hinweg und ist auf der gegenüberliegenden Seite mit dem dortigen Randbereich in einer Art und Weise verbunden, die eine Relativverlagerung des Verbindungsstegs gegenüber dem Randbereich in Richtung der Haupterstreckungsrichtung verhindert. Hierdurch wird wiederum die gewünschte Verwindungssteifigkeit erreicht. Die dort verwendete Verbindung ist vorzugsweise eine formschlüssige, die wiederum insbesondere über eine den Verbindungssteg und das Hohlprofil durchdringende Schrauben- oder Nietverbindung gebildet sein kann. Im Falle der Gestaltung mit zwei Verbindungsstegen je Stirnende, die sich von gegenüberliegenden Seiten aufeinander zu erstrecken, erfolgt diese Verbindung fluchtend mit dem Schlitz.

Auch durch diese Gestaltung wird ein hohes Maß an Verwindungssteifigkeit erreicht, die zudem aufgrund der stoffschlüssigen Einstückigkeit des Verbindungsstegs mit dem Hohlprofil sogar noch von höherer Stabilität sein kann als bei der Verwendung eines vollständig separaten Verbindungsstegs.

Der mindestens eine Verbindungssteg je Stirnende ist vorzugsweise durch einen quer zur Haupterstreckungsrichtung eingebrachten Schnitt im Hohlprofil gebildet, durch den der Verbindungssteg von einem umgefalzten Randbereich des Austrittsspalts getrennt wird. Dies erlaubt es, bei der Fertigung nach Einbringen dieses quer zu Haupterstreckungsrichtung sich erstreckenden Schnittes den Randbereich bzw. die Randbereiche im Bereich des zu bildenden Austrittsspaltes umzufalzen, wobei der oder die Verbindungsstege aufgrund des Schnittes hiervon untangiert bleiben. Eine einfache Herstellbarkeit ist die Folge.

Bei einer erfindungsgemäßen Rollokassette handelt es sich vorzugsweise um eine Rollokassette aus Metall, insbesondere aus einem Metallblech konstanter Dicke. Diese Dicke beträgt vorzugsweise zur Erzielung einer geringen Masse maximal 1,5 mm, insbesondere vorzugsweise maximal 1 mm. Wie oben verdeutlicht, kann diese geringe Wandungsstärke des Hohlprofils aufgrund der durch den Verbindungssteg erzielbaren Verwindungssteife ausreichen. Vorzugsweise ist auch der Verbindungssteg selbst, auch wenn er als separates Bauteil vorgesehen ist, aus Metall gefertigt. Auch hierbei handelt es sich vorzugsweise um ein Blechteil, welches durch Stanzen oder dergleichen in die gewünschte Form gebracht wird, so dass beispielsweise hierdurch die Steckabschnitte oben beschriebener Art gebildet werden.

Die erfindungsgemäße Rollokassette findet bei einem erfindungsgemäßen Rollo Verwendung, welches insbesondere zur Verwendung in einem Fahrzeug vorgesehen und ausgebildet ist. Dabei umfasst dieses Rollo neben der erfindungsgemäßen Rollokassette auch noch eine in der Rollokassette auch drehbar gelagerte Rollowelle sowie eine auf der Rollowelle aufgewickelte und von der Rollowelle abwickelbare Rollobahn.

### Kurzbeschreibung der Zeichnungen

Weitere Vorteile und Aspekte der Erfindung ergeben sich außer aus den Ansprüchen auch aus der nachfolgenden Beschreibung bevorzugter Beispiele einer Rollokassette welche im Weiteren erläutert sind. Dabei zeigen:
- Fig. 1a und 1b: eine erste Ausführungsform einer nicht erfindungsgemäßen Rollokassette mit separatem Verbindungssteg,
- Fig. 2: eine zweite Ausführungsform einer nicht erfindungsgemäßen Rollokassette mit separatem Verbindungssteg,
- Fig. 3: eine dritte Ausführungsform einer nicht erfindungsgemäßen Rollokassette mit separatem Verbindungssteg,
- Fig. 4a und 4b: eine vierte Ausführungsform einer nicht erfindungsgemäßen Rollokassette mit separatem Verbindungssteg,
- Fig. 5a und 5b: eine fünfte Ausführungsform einer nicht erfindungsgemäßen Rollokassette, die eine Variante zur Ausführungsform der Fig. 4a und 4b darstellt, und
- Fig. 6a und 6b: eine sechste, erfindungsgemäße Ausführungsform einer Rollokassette mit angeformtem Verbindungssteg.

### Detaillierte Beschreibung der Ausführungsbeispiele

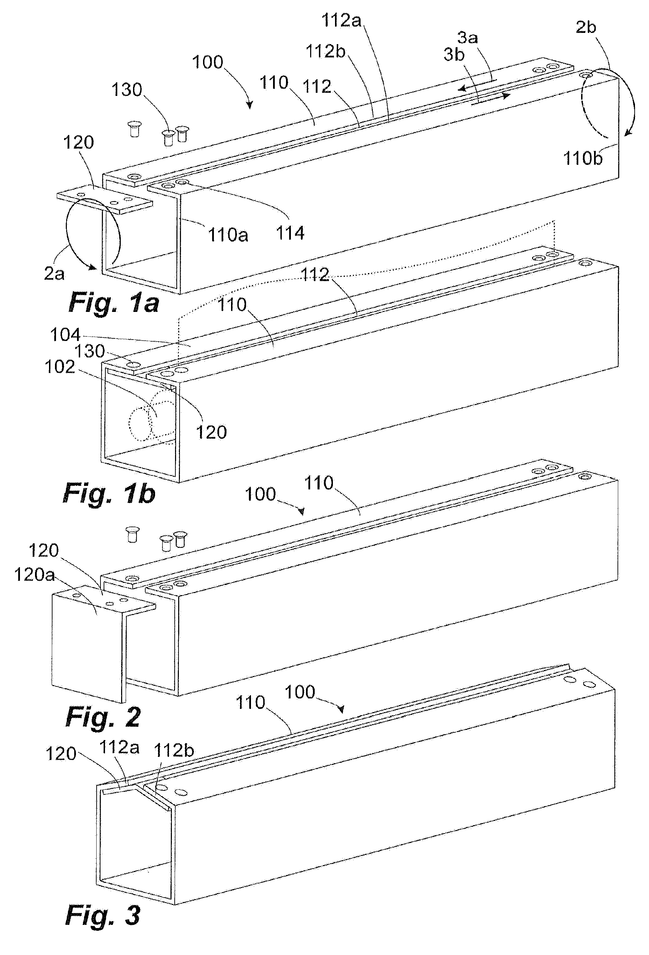

Fig. 1 a und 1 b zeigen in schematischer Darstellung eine erste Ausführungsform einer Rollokassette. Diese Rollokassette 100 umfasst primär ein offenes Hohlprofil 110, welches als gebogenes Blechteil ausgebildet ist. Die Wandungsstärke dieses Hohlprofils liegt bei etwa 1 mm. Durch die Ausgestaltung als offenes Hohlprofil ist dieses einfach und kostengünstig herzustellen. Allerdings neigt ein solches offenes Hohlprofil dazu, bei einer durch die Pfeile 2a, 2b verdeutlichten Momentenbeaufschlagung stark zu verwinden. Die daraus resultierende Bewegung in Längsrichtung des Hohlprofils 110 ist anhand der Pfeile 3a und 3b verdeutlicht. Um dies zu verhindern, sind beidseitig an den Stirnenden 110a, 110b des Hohlprofils 110 Verbindungsstege 120 vorgesehen, wobei in den Ausführungsbeispielen der Fig. 1 bis 5 zur Verdeutlichung stets nur der jeweilige Verbindungsstege auf der linken Seite dargestellt sind.

Im Falle der Ausgestaltung der Fig. 1 a und 1 b handelt es sich bei dem Verbindungssteg 120 um einen einfachen Blechstreifen. Dieser ist, wie in Fig. 1b dargestellt, im montierten Zustand innenseitig im Bereich eines Schlitzes 112 des Hohlprofils 110 vorgesehen und mit den Randbereichen 112a, 112b beidseitig des Schlitzes mittels Nieten 130 verbunden. Dabei sind zumindest an einem Randbereich 112a zwei Bohrungen 114a für diese Nieten 130 vorgesehen, so dass nach der in Fig. 1b dargestellten erfolgten Befestigung der Verbindungssteg 120 fest und insbesondere auch drehfest mit dem Randbereich 112a verbunden ist. Am Randbereich 112b auf der gegenüberliegenden Seite ist beim Ausführungsbeispiel der Fig. 1 a und 1 b nur ein Niet 130 vorgesehen, der das Hohlprofil 110 mit dem Verbindungssteg 120 verbindet. Selbstverständlich kann zur Verbesserung der Krafteinleitung auch hier ein zweiter Niet vorgesehen sein.

Das somit hergestellte Hohlprofil zur Aufnahme einer in Fig. 1b dargestellten Rollowelle 102, die dem Zweck des Aufwickelns einer Rollobahn 104 dient, ist preisgünstig herzustellen und ausgesprochen stabil. Es stellt daher eine preisgünstige Alternativ zu einem originär geschlossenen Hohlprofil dar, in welches der Austrittsspalt nach Herstellung des Hohlprofils eingebracht wird.

Die Ausgestaltung der Fig. 2 verdeutlicht, dass der Verbindungssteg 120 nicht zwingend als einfacher planer Verbindungsstreifen ausgebildet sein muss. Stattdessen kann er so geformt sein, dass er ein an den Stirnenden 110a, 110b des Hohlprofils gegebenen offenen Querschnitt teilweise oder vollständig verschließt. In einem solchen Fall ist es von Vorteil, wenn die vorzugsweise einstückig am Verbindungssteg vorgesehene Stirnwand 120a auf ihrer Innenseite in nicht dargestellter Art und Weise auch Lagermittel zur Lagerung der Wickelwelle 102 aufweist.

Fig. 3 verdeutlicht, dass die Stabilisierung des offenen Hohlprofils mittels eines Verbindungsstegs 120 nicht auf Kassetten beschränkt ist, bei denen die Randbereiche 112a, 112b beidseitig des Schlitzes 112 fluchtend zueinander angeordnet sind. Stattdessen kann durchaus auch vorgesehen sein, dass der Schlitz 112 an exponierter Position zwischen zwei zueinander angewinkelten Randbereichen 112a, 112b angeordnet ist. In einem solchen Fall ist der Verbindungssteg 120 in der in Fig. 3 dargestellten Art und Weise als gebogenes Bauteil vorzusehen.

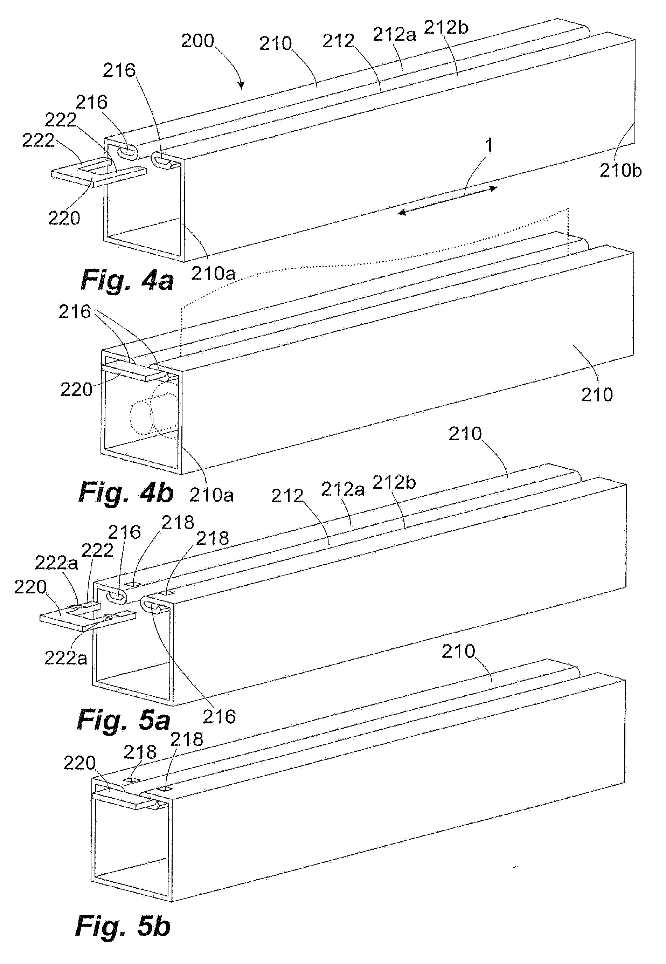

Die Fig. 4a und 4b zeigen eine weitere Ausführungsform einer Rollokassette 200. Bei dieser finden keine vom Hohlprofil 210 und dem Verbindungssteg 220 separaten Verbindungsmittel Anwendung. Stattdessen ist das Hohlprofil 210 im Bereich des Schlitzes 212 jeweils in beiden Randbereichen 212a, 212b umgefalzt, so dass sich hierdurch an beiden Stirnseiten 210a, 210b je zwei Aufnahmeschächte 216 bilden. Korrespondierend hierzu ist der Verbindungssteg 220 mit zwei Steckabschnitten 222 versehen, die sich in etwa in der Haupterstreckungsrichtung 1 der Rollokassette 200 erstrecken und die eine sich zu ihrem distalen Ende leicht verjüngende Form aufweisen. Bei dieser Ausgestaltung ist vorgesehen, dass diese in etwa U-förmigen Verbindungsstege 220 beidseitig des Schlitzes 212 in die Aufnahmeschächte 216 eingeschoben werden. Dabei sind die Aufnahmeschächte 216 und die Einsteckabschnitte 222 derart aufeinander angepasst, dass sich eine kraftschlüssige haltende Pressverbindung ergibt, die einer Verwindung der Rollokassette 200 entgegensteht. Um eine ausreichende Pressverbindung herzustellen, ist es jedoch erforderlich, mit erheblichem Kraftaufwand die Steckabschnitte 222 in die Aufnahmeschächte 216 hineinzudrücken.

Die Ausgestaltung der Fig. 5a und 5b ist hierzu verwandt, weist jedoch Steckabschnitte 222 auf, an deren Oberseite Rastverdickungen 222a vorgesehen sind. Diese weisen an ihrer nach außen weisenden Seite eine senkrechte Flanke und auf ihrer - bezogen auf die Fig. 5a - in Richtung der Aufnahmeschächte 216 zeigenden Seite langgestreckte Schrägen auf. Korrespondierend hierzu sind in den Randbereichen 212a, 212b beidseitig des Schlitzes 212 Ausnehmungen 218 vorgesehen, in die die Rastverdickungen 222a einrücken können.

Bei der Montage der Rollokassette gemäß der Fig. 5a und 5b kann daher ein erheblich geringerer Kraftaufwand ausreichen als bei der Montage der Ausgestaltung der Fig. 4a und 4b. Sobald der Verbindungssteg 220 ausreichend weit mit seinen beiden Steckabschnitten 222 in die Aufnahmeschächte 216 eingeschoben ist, schnappen die Rastverdickungen 222a in die Ausnehmungen 218 ein und verhindern so in Art eines Widerhakens wirksam, dass eine Relativbewegung der Randbereiche 212a und 212b gegeneinander in entgegengesetzte Richtungen möglich ist. Wiederum ist eine hohe Verwindungssteife der Rollokassette 200 die Folge.

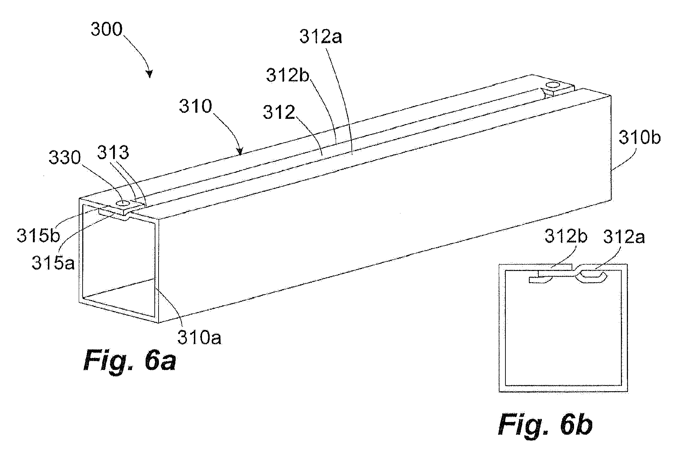

Bei der erfindungsgemäßen Ausgestaltung gemäß der Fig. 6a ist kein separater Verbindungssteg vorgesehen. Stattdessen sind die Randbereiche 312a, 312b ähnlich der Ausgestaltung der Fig. 4 und 5 umgefalzt. Jeweils in einem Stirnendbereich 310a ist jedoch ein Schnitt 313 vorgesehen, durch den Verbindungsstege 315a, 315b von der Umfalzung ausgenommen sind. Diese erstrecken sich daher im Wesentlichen in der Ebene der Randbereiche 312a und 312b und überlappen einander. Im Überlappungsbereich sind sie miteinander durch ein Verbindungsmittel, vorliegend in Form eines Niets 330 miteinander verbunden. Die hierdurch zu erzielende Verwindungssteifigkeit übersteigt noch die Verwindungssteifigkeit der vorangegangenen Ausführungsformen, da aufgrund der einstückigen Anformung der Verbindungsstege 315a, 315b an das Hohlprofil 310 eine Trennung der Verbindungsstege vom Hohlprofil 310 nicht erwartet werden muss.

Bei einer alternativen Ausgestaltung, die zeichnerisch nicht dargestellt ist, ist nur an eine der beiden Seiten ein Verbindungssteg angeformt, der sich in Richtung der gegenüberliegenden Seite erstreckt. Dieser überlappt jenseits des Austrittsschlitzes den gegenüberliegenden Randbereich und ist dort wiederum mittels eines Verbindungsmittels wie eines Niets befestigt.

## Patentansprüche

1. Rollokassette (300) zur Aufnahme einer Rollowelle und einer in einem Stauzustand auf der Rollowelle aufgewickelten und in einen Funktionszustand durch einen Austrittsspalt (312) der Rollokassette (300) von der Rollowelle in einer Längsrichtung abziehbaren Rollobahn (104), mit einem Gehäuse, welches ein durchgehend geschlitztes und sich in einer Haupterstreckungsrichtung (1) quer zur Längsrichtung erstreckendes Hohlprofil (310) aufweist, dessen Schlitz (312) den Austrittsspalt (312) der Rollokassette bildet, **dadurch gekennzeichnet, dass**
- sich von mindestens einem Randbereich (312a, 312b) an mindestens einem der Stirnenden (310a, 310b) ein Verbindungssteg über den Schlitz (312) erstreckt, der einstückiger Teil des Hohlprofils (310) ist und dessen distales Ende am gegenüberliegenden Randbereich befestigt ist, oder
- sich von beiden gegenüberliegenden Randbereichen (312a, 312b) an mindestens einem der Stirnenden (310a, 310b) Verbindungsstege (315a, 315b) über den Schlitz (312) erstrecken, die jeweils einstückiger Teil des Hohlprofils (310) sind und deren distale Enden miteinander verbunden sind.

2. Rollokassette nach Anspruch 1,
**dadurch gekennzeichnet, dass**
der mindestens eine Verbindungssteg (315a, 315b) durch einen quer zur Haupterstreckungsrichtung (1) eingebrachten Schnitt (313) gebildet wird, durch den der Verbindungssteg (315a, 316b) von einem umgefalzten Randbereich (312a, 312b) des Austrittsspaltes (312) getrennt wird.

3. Rollokassette nach einem der vorsehenden Ansprüche,
**dadurch gekennzeichnet, dass**
das Hohlprofil (310) aus Metall, insbesondere aus einem Metallblech konstanter Dicke gefertigt ist, wobei die Dicke vorzugsweise maximal 1,5 mm beträgt, vorzugsweise von maximal 1 mm.

4. Rollokassette nach einem der vorstehenden Ansprüche,
**dadurch gekennzeichnet, dass**
der Verbindungssteg (320) aus Metall gefertigt ist.

5. Rollo, insbesondere zur Verwendung in einem Fahrzeug, mit
- einer Rollokassette (300) und
- einer in der Rollokassette drehbar gelagerten Rollowelle und
- einer auf der Rollowelle aufgewickelten und von der Rollowelle abwickelbaren Rollobahn,
**dadurch gekennzeichnet, dass** die Rollokassette (300) nach einem der vorstehenden Ansprüche ausgebildet ist.

## Claims

1. Roller blind box (300) for holding a roller blind shaft and a roller blind web (104) which in a stowed condition is wound onto the roller blind shaft and is adapted to be drawn in a longitudinal direction off the roller blind shaft into a functional condition through an exit slot (312) of the roller blind box (300), having a housing which has a hollow section (310) slotted throughout and extending in a main extension direction (1) transversely to the longitudinal direction, with the slot (312) therein providing the exit slot (312) of the roller blind box,
**characterized in that**
- a connecting bridge extends over the slot (312) from at least one edge region (312a, 312b) on at least one of the face ends (310a, 310b), with the connecting bridge being in one piece with the hollow section (310) and the distal end thereof fastened to the opposite edge region, or
- connecting bridges (315a, 315b) extend over the slot (312) from both opposite edge regions (312a, 312b) on at least one of the face ends (310a, 310b), each of the connecting bridges being in one piece with the hollow section (310) and the distal ends thereof connected to one another.

2. Roller blind box according to claim 1, **characterized in that** the at least one connecting bridge (315a, 315b) is formed by means of a cut (313) made transversely to the main extension direction (1), by which cut the connecting bridge (315a, 316b) is separated from a folded edge region (312a, 312b) of the exit slot (312).

3. Roller blind box according to any of the preceding claims, **characterized in that** the hollow section (310) is made of metal, in particular made of a metal sheet of constant thickness, said thickness being preferably of maximum 1.5 mm, more preferably of maximum 1 mm.

4. Roller blind box according to any of the preceding claims, **characterized in that** the connecting bridge (320) is manufactured of metal.

5. Roller blind, in particular for use in a vehicle, comprising
- a roller blind box (300) and
- a roller blind shaft rotatably mounted inside the roller blind box, and
- a roller blind web which is wound onto the roller blind shaft and can be wound off the roller blind shaft,
**characterized in that** the roller blind box (300) is configured according to any of the preceding claims.

## Revendications

1. Caisson de store à enrouleur (300) destiné à recevoir un arbre de store et une toile de store (104) enroulée sur l'arbre de store dans un état de rangement et extractible de l'arbre de store dans une direction longitudinale à travers une fente de sortie (312) du caisson de store à enrouleur (300) vers un état de fonction, avec un boîtier qui présente un profilé creux (310) fendu en continu et s'étendant dans une direction d'extension principale (1) transversalement à la direction longitudinale, dont la fente (312) forme la fente de sortie (312) du caisson de store à enrouleur,
**caractérisé en ce que**
- une nervure de liaison s'étend au-dessus de la fente (312) à partir d'au moins une zone de bord (312a, 312b) d'au moins une des extrémités frontales (310a, 310b), la nervure faisant partie du profilé creux (310) en une seule pièce et son extrémité distale étant fixée sur la zone de bord opposée, ou
- des nervures de liaison s'étendent au-dessus de la fente (312) à partir des deux zones de bord opposées (312a, 312b) d'au moins une des extrémités frontales (310a, 310b), lesdites nervures respectivement faisant partie du profilé creux (310) en une seule pièce et leurs extrémités distales étant reliées l'une à l'autre.

2. Caisson de store à enrouleur selon la revendication 1, **caractérisé en ce que** l'au moins une nervure de liaison (315a, 315b) est formée par une incision aménagée transversalement à la direction d'extension principale (1), par le biais de laquelle la nervure de liaison (315a, 316b) est séparée d'une zone de bord repliée (312a, 312b) de la fente de sortie (312).

3. Caisson de store à enrouleur selon l'une quelconque des revendications précédentes, **caractérisé en ce que** le profilé creux (310) est en métal, en particulier d'une tôle métallique d'épaisseur constante, dans lequel l'épaisseur vaut de préférence au maximum 1,5 mm, et de préférence au maximum 1 mm.

4. Caisson de store à enrouleur selon l'une quelconque des revendications précédentes, **caractérisé en ce que** la nervure de liaison (320) est fabriqué en métal.

5. Store à enrouleur, à utiliser en particulier dans un véhicule, avec
- un caisson de store à enrouleur (300) et
- un arbre de store monté de façon rotative dans le caisson de store à enrouleur, et
- une toile de store enroulée sur l'arbre de store et déroulable de l'arbre de store,
**caractérisé en ce que** le caisson de store à enrouleur (300) est configuré selon l'une quelconque des revendications précédentes.
